# EUROPEAN PATENT APPLICATION

(11) **EP 2 136 341 A1**
(43) Date of publication of application: **23.12.2009**
(21) Application number: 09162668.9
(22) Date of filing: 15.06.2009
(51) Int. Cl.: G07F 9/02

(54) **Product providing apparatus and method for providing gui using the same**

(30) Priority: 16.06.2008 KR 20080056201
(71) Applicant: Samsung Electronics Co., Ltd., Suwon-si, Gyeonggi-do 442-742 (KR)
(72) Inventor: Nam, Yun-suk, Suwon-si Gyeonggi-do (KR); Park, Jong-won, Suwon-si Gyeonggi-do (KR); Cho, Seung-kee, Anyang-si Geyonggi-do (KR)
(74) Representative: D'Halleweyn, Nele Veerle Trees Gertrudis

(57) **Abstract**

A product providing apparatus and a method for providing a GUI using the same are provided. The product providing apparatus includes a display unit, a payment unit, and a control unit which determines the form of payment and controls images corresponding to products to be displayed. Therefore, it is possible to provide a user with a menu field more conveniently and more intuitively.

## Description

### CROSS-REFERENCE TO RELATED APPLICATIONS

This application claims priority from Korean Patent Application No. 10-2008-0056201, filed on June 16, 2008, in the Korean Intellectual Property Office, the disclosure of which is incorporated herein by reference in its entirety.

### BACKGROUND OF THE INVENTION

### 1. Field of the Invention

Apparatuses and methods consistent with the present invention relate to providing products and providing a graphical user interface (GUI), and more particularly, to providing products and providing a GUI according to the form of payment.

### 2. Description of the Related Art

Consumers purchase products using vending machines by inserting coins, paper money or credit cards. Such vending machines have become increasingly widespread because of the shortage of human resources and of changes in the consumption environment and consumption patterns. Additionally, vending machines occupy a small space and can be set up with little capital, so users can be provided with various products in diverse locations.

In a related art vending machine, when a relatively small lamp installed in a button of the related art vending machine is illuminated, a user may press the button with the illuminated lamp, and the vending machine may dispense a product. In more detail, the user may check which button lamp is illuminated, and press the button having the illuminated lamp, in order to obtain a desired product. Since the button has the relatively small lamp, it is difficult for a user to intuitively know which products are available for purchase.

Additionally, since the related art vending machine displays a menu comprising products available for purchase, there is a need to change the products displayed on the menu every time the products change, which may cause user inconvenience.

Furthermore, the related art vending machine allows only a lamp indicating that users can buy products to be illuminated, and displays products they are able to purchase and other products available for purchase, without changing the menu, in order to display the products they are able to purchase when accepting cash, and to display all products available for purchase when accepting a card.

Therefore, it is difficult for users to more intuitively distinguish products they are able to purchase from other products available for purchase.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a product providing apparatus, and a method for providing a GUI, so that a user may select a desired product more easily and conveniently.

According to an aspect of the present invention, there is provided a product providing apparatus comprising a GUI generating unit which generates an image corresponding to an image signal; a display unit which displays the image; a payment unit which receives payment by cash or card; and a control unit which determines the form of payment received by the payment unit, which controls images corresponding to products able to be purchased to be distinguished from the other images corresponding to products not able to be purchased and the distinguished images to be displayed if the form of payment is determined to be cash, and which controls images corresponding to all products available for purchase to be displayed if the form of payment is determined to be a card.

If cash is inserted, the control unit may control the images corresponding to the products able to be purchased to be distinguished from the other images corresponding to the products not able to be purchased, using the color, a size, a position, and a form of the images, and controls the distinguished images to be displayed.

The control unit may control the images corresponding to the products able to be purchased to be displayed, and the other images corresponding to the products not able to be purchased not to be displayed.

The form of images may comprise a quantity graphic representation added next to images corresponding to products able to be purchased with the inserted cash in order to set the number of the products. The control unit may control the number of the products to be changed within a preset range.

The number of the products may be an integer, and the preset range may be obtained by dividing the amount of cash inserted by the price of a product corresponding to an image to which the graphic representation is added.

If one or more images are selected from among images corresponding to all products available for purchase, the control unit may control the selected images to be distinguished from the other non-selected images, using at least one of color, size, position and form of the selected images, and may control the distinguished images to be displayed.

The control unit may control at least one of the sum of money for purchasing the products corresponding to the selected images and the amount of money remaining after subtracting the sum of money for purchasing the products corresponding to the selected images from the amount of cash inserted to be displayed.

If one or more images are selected from among images corresponding to all products available for purchase, the control unit may control the selected images to be distinguished from the other non-selected images, using at least one of color, size, position and form of the selected images, and may control the distinguished images to be displayed.

The control unit may control the sum of money for purchasing the products corresponding to the selected images to be displayed.

If additional cash is inserted, the control unit may control images corresponding to products able to be purchased with a total amount of cash that has been inserted to be distinguished from the other images corresponding to products not able to be purchased with the total amount of cash that has been inserted, and may control the distinguished images to be displayed.

The product providing apparatus may further comprise a touch screen which receives a selection command input by a user. The control unit may control a product selected by the user using the touch screen to be provided to the user.

The products able to be purchased may comprise products able to be purchased with an amount of money equal to or less than the amount of cash inserted.

According to another aspect of the present invention, there is provided a method for providing a GUI, the method comprising receiving payment by cash or card; determining the form of received payment; and displaying images so that images corresponding to products able to be purchased are distinguished from images corresponding to products not able to be purchased, if the form of payment is determined to be cash, and displaying images corresponding to all products available for purchase if the form of payment is determined to be a card.

The products able to be purchased may comprise products able to be purchased with an amount of money equal to or less than the amount of cash inserted

The maximum value able to be increased by the new fixed value, and the GUI generating unit able to be update the images to be displayed on the screen so as to be consistent with the increased maximum value if a new form of payment having a new fixed value is received by the payment unit,.

### BRIEF DESCRIPTION OF THE DRAWINGS

The above and/or other aspects of the present invention will be more apparent by describing certain exemplary embodiments of the present invention with reference to the accompanying drawings, in which:
FIG. 1 is a front view of a vending machine according to an exemplary embodiment of the present invention;
FIGS. 2A and 2B illustrate a touch screen on the vending machine of FIG. 1 according to an exemplary embodiment of the present invention;
FIGS. 3A to 3F illustrate a touch screen to be displayed when cash is inserted into the vending machine of FIG. 1 according to an exemplary embodiment of the present invention;
FIG. 4 illustrates a touch screen to be displayed when additional cash is inserted into the vending machine of FIG. 1 according to an exemplary embodiment of the present invention;
FIGS. 5A and 5B illustrate a touch screen to be displayed when a user selects a product able to be purchased according to an exemplary embodiment of the present invention;
FIGS. 6A to 6D illustrate a touch screen to be displayed when a card is inserted into the vending machine of FIG. 1 according to an exemplary embodiment of the present invention;
FIG. 7 is a block diagram of the vending machine of FIG. 1 capable of providing a graphical user interface (GUI) according to an exemplary embodiment of the present invention;
FIG. 8 is a flowchart illustrating a process by which the vending machine of FIG. 1 provides a GUI according to an exemplary embodiment of the present invention;
FIG. 9 is a block diagram of a product providing apparatus according to an exemplary embodiment of the present invention; and
FIG. 10 is a flowchart illustrating a method for providing products according to the form of payment in an exemplary embodiment of the present invention.

### DETAILED DESCRIPTION OF EXEMPLARY EMBODIMENTS

Certain exemplary embodiments of the present invention will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments of the invention. Thus, it is apparent that the exemplary embodiments of the present invention can be carried out without those specifically defined matters. Also, well-known functions or constructions are not described in detail since they would obscure the description with unnecessary detail.

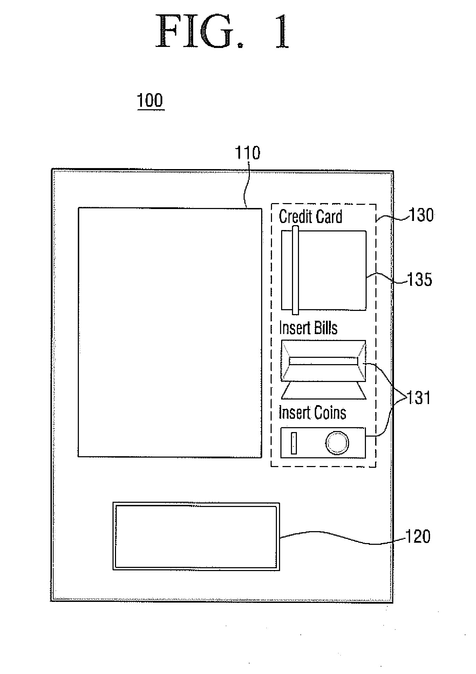

FIG. 1 is a front view of a vending machine 100 according to an exemplary embodiment of the present invention. The vending machine 100 of FIG. 1 generates images and displays the generated images on a screen, so that a user can select a desired product via the screen. Additionally, the images comprise images (hereinafter, referred to as 'product images') corresponding to products stored in a product storage unit (not shown) of the vending machine 100, and images for advertising products.

The vending machine 100 of FIG. 1 comprises a touch screen 110, a dispensing unit 120 and a payment unit 130.

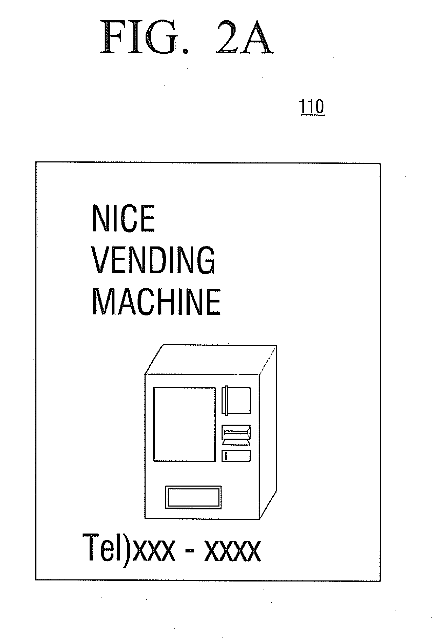

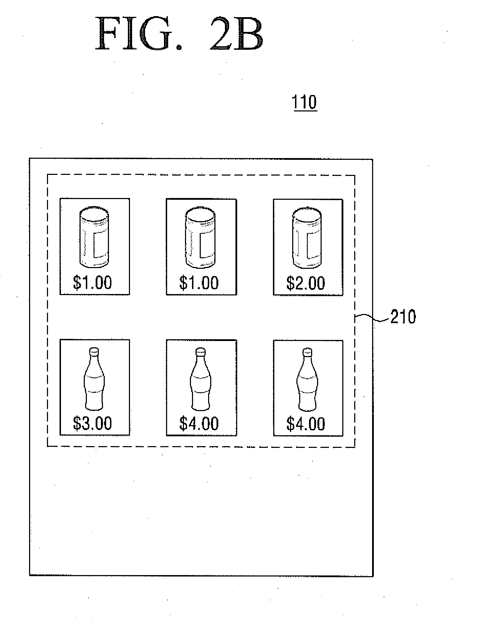

The touch screen 110 displays an advertising image and a menu. The advertising image and menu displayed on the touch screen will be described with reference to FIGS. 2A and 2B.

The touch screen 110 functions to receive user operating commands input by a touch or dragging operation. Accordingly, it is possible for a user to select a desired product by touching or dragging an image indicating the product displayed on the touch screen 110, and to know how much is paid for the selected product using the touch screen 110.

The payment unit 130 receives the payment from a user, in the form of one of cash or card. The payment unit 130 comprises a cash payment unit 131 and a card payment unit 135. Other embodiments may use other forms of payment as well, such as smart cards, cellular phones, etc. The cash payment unit 131 is divided into a bill payment unit to receive bills paid by the user, and a coin payment unit to accept coins. Hereinafter, both the bill payment unit and coin payment unit are referred to here as 'a cash payment unit' for convenience of description.

FIGS. 2A and 2B illustrate the touch screen 110 of the vending machine 100 according to an exemplary embodiment of the present invention.

An advertising image shown in FIG. 2A is displayed on the touch screen 110 except when a user desires to buy a product through the vending machine 100. The advertising image may be used to advertise products stored in the vending machine 100, or to advertise products or services other than the stored products.

In the former case, the advertising image has an effect of inducing users to buy products, and in the latter case, the advertising image creates advertising revenue. FIG. 2A shows an advertising image corresponding to the latter case according to an exemplary embodiment of the present invention.

If a user desires to buy a product using the vending machine 100, a menu field 210 is displayed on the touch screen 110, as shown in FIG. 2B. The menu field 210 displays images representing products able to be purchased or images representing all products available for purchase.

The products able to be purchased refer to products which a user can buy using a form of payment, such as cash, for which payment is in fixed amounts of payable money.

All the products available for purchase include products which a user can buy using a form of payment, such as a credit card, without limits to the amount of payment or up to a considerable amount of payable money.

Accordingly, if a user selects one from among the images representing products able to be purchased or the images representing all products available for purchase, from the menu field 210, the vending machine 100 may dispense a product corresponding to the selected image.

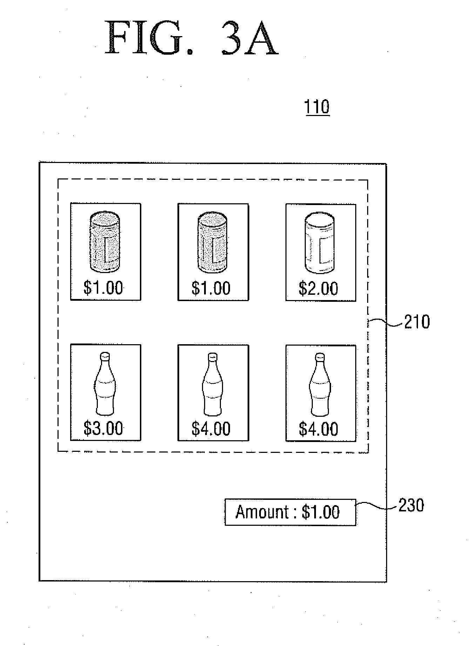

FIGS. 3A to 3F illustrate the touch screen 110 to be displayed when cash is inserted into the vending machine 100 of FIG. 1, according to an exemplary embodiment of the present invention.

Specifically, FIG. 3A illustrates an exemplary embodiment in which a plurality of product images with different colors are displayed on the touch screen 110, to distinguish purchasable products from unpurchasable products.

If cash is inserted into the cash payment unit 131, the menu field 210 is formed according to the amount of inserted cash and displayed on the touch screen 110.

In FIG. 3A, the menu field 210 showing six product images is displayed on the touch screen 110. Since the six product images indicate products stored in the vending machine 100, as described above, it is understood that six types of products are stored in the vending machine 100.

Each of the six product images contains information on a price of the respective product. The vending machine 100 stores two one-dollar products, a two-dollar product, a three-dollar product, and two four-dollar products.

In the exemplary embodiment of the present invention, if a user inserts one dollar into the cash payment unit 131, the menu field 210 may be arranged so that the six product images may be divided into images representing products able to be purchased for one dollar and images representing products not able to be purchased for one dollar.

In other words, two images representing the two one-dollar products are displayed in a different color from other images corresponding to the two-dollar, three-dollar and four-dollar products. As the two images representing the two one-dollar products change in color, it is possible for the user to distinguish the two images representing the two one-dollar products from other images.

Accordingly, the images representing purchasable products are displayed in a different manner from the images representing unpurchasable products, and thus it is possible for the user to more intuitively perceive products able to be purchased with the inserted cash.

Additionally, the two images whose colors have changed are able to respond to user's touch (hereinafter, these are referred to as being in an 'active state'), and the other four images whose colors have not changed are unable to respond to user's touch (hereinafter, these are referred to as being in an 'inactive state').

Thus, it is possible for the user to touch the active images and select products corresponding to the touched images, but it is impossible for the user to touch the inactive images.

A sum display field 230 is displayed below the menu field 210. The sum display field 230 shows information regarding the amount of money inserted by the user. In the exemplary embodiment of the present invention, as the user inserts one dollar, information indicating that a total of one dollar has been inserted is displayed on the sum display field 230.

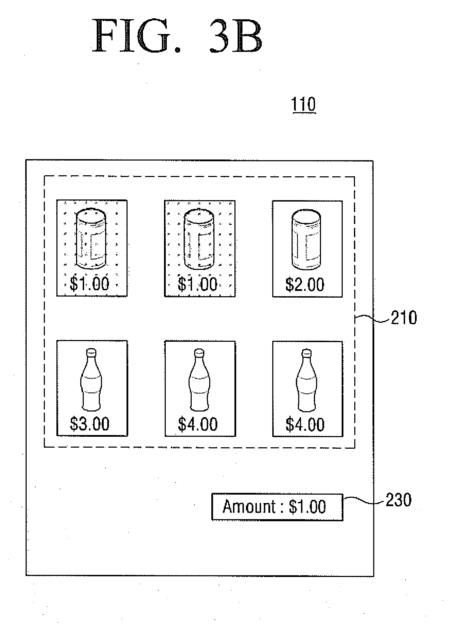

FIG. 3B illustrates a plurality of product images on which graphics are superimposed, to distinguish purchasable products from unpurchasable products, according to an exemplary embodiment of the invention.

If a user inserts one dollar into the cash payment unit 131, graphics are added to two images corresponding to two one-dollar products, and the other four images remain unchanged. Accordingly, the two images corresponding to the two one-dollar products may be distinguished from the other four images, and it is possible for the user to more intuitively perceive which products he or she is able to purchase.

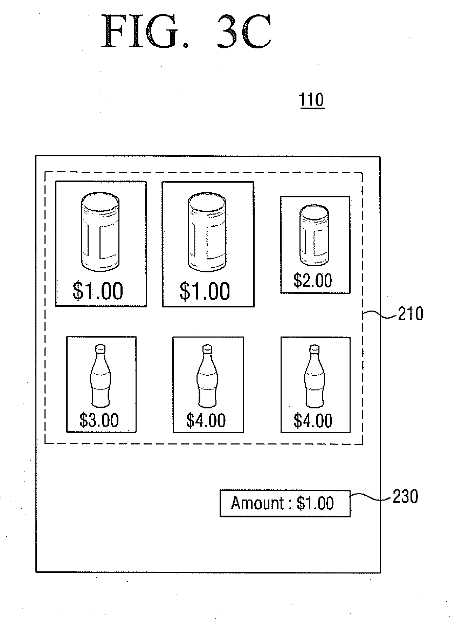

FIG. 3C illustrates a plurality of product images having a different size to distinguish purchasable products from unpurchasable products, according to an exemplary embodiment of the invention.

If a user inserts one dollar into the cash payment unit 131, two images corresponding to two one-dollar products increase in size, so the other four images appear as if they have been reduced in size. Accordingly, it is possible for the user to distinguish the two images corresponding to the two one-dollar products from the other four images.

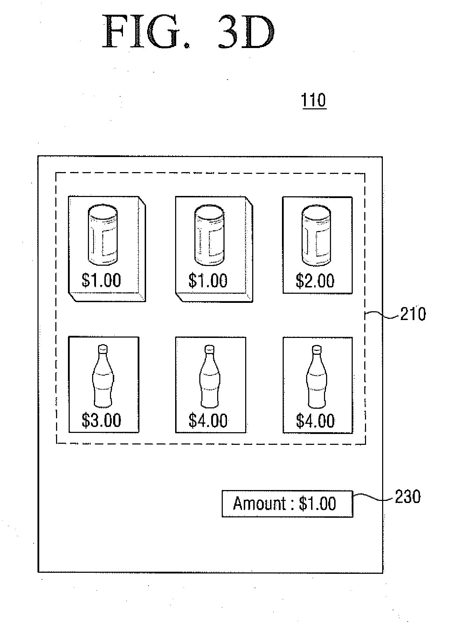

FIG. 3D illustrates a plurality of product images having different three-dimensional (3D) effects in order to distinguish purchasable products from unpurchasable products, according to an exemplary embodiment of the invention.

If a user inserts one dollar into the cash payment unit 131, two images corresponding to two one-dollar products are displayed in 3D form, and the other four images are displayed in two-dimensional (2D) form. It is thus possible for the user to distinguish the two images corresponding to the two one-dollar products from the other four images.

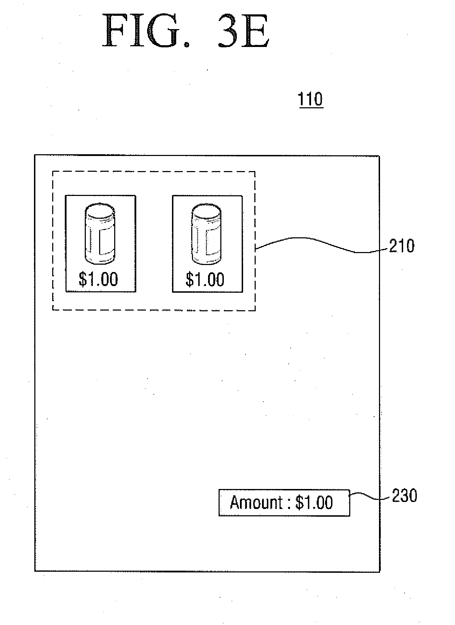

FIG. 3E illustrates two images representing two purchasable products displayed on the menu field 210, to distinguish purchasable products from unpurchasable products, according to an exemplary embodiment of the invention.

If one dollar is inserted into the cash payment unit 131, only the two images corresponding to the two one-dollar products are displayed on the menu field 210, and the other four images are not displayed on the menu field 210. Accordingly, it is possible to distinguish the two images corresponding to the two one-dollar products from the other four images.

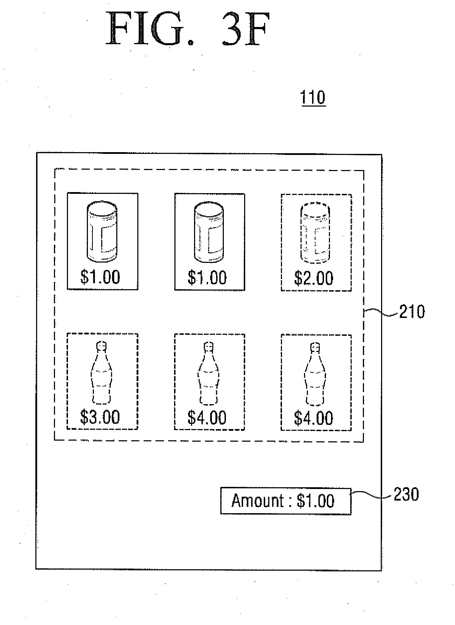

FIG. 3F illustrates a plurality of product images displayed on the menu field 210 in various display manners, to distinguish purchasable products from unpurchasable products, according to an exemplary embodiment of the invention.

If one dollar is inserted into the cash payment unit 131, outlines of two images corresponding to the two one-dollar products are indicated by solid lines, and outlines of the other four images are indicated by dotted lines. Accordingly, it is possible to distinguish the two images corresponding to the two one-dollar products from the other four images.

While FIGS. 3A to 3F illustrate exemplary embodiments in which various product images are displayed in different display patterns to distinguish purchasable products from unpurchasable products, this is merely an example for convenience of description. Accordingly, the present invention is also applicable to other display patterns than those described above to distinguish purchasable products from unpurchasable products.

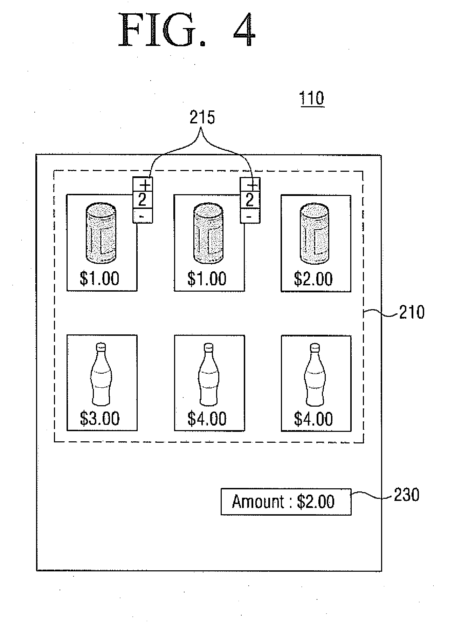

FIG. 4 illustrates the touch screen 110 to be displayed when additional cash is inserted into the vending machine 100, according to an exemplary embodiment of the invention. Specifically, FIG. 4 shows a situation in which colors of products able to be purchased for one dollar have changed when one dollar has been inserted into the cash payment unit 131, as shown in FIG. 3A, and an additional one dollar is also inserted into the cash payment unit 131.

In this situation, if additional cash is inserted into the cash payment unit 131, the menu field 210 is re-constructed according to the sum of the amount of prepaid cash and the amount of additional cash, and is displayed on the touch screen 110.

For example, when one dollar has been inserted into the cash payment unit 131, if a user additionally inserts one dollar into the cash payment unit 131, the menu field 210 is re-constructed so that images representing products able to be purchased with the inserted two dollars are distinguished from other images, namely images representing products not able to be purchased with the inserted two dollars.

Accordingly, two images for two one-dollar products and an image for a two-dollar product are displayed on the menu field 210 in a different color from images for three-dollar and four-dollar products. In other words, the color of the image for the two-dollar product changes to be identical to the two images for the two one-dollar products, so the three images for one-dollar and two-dollar products are distinguished from the other three images.

As described above, the images representing purchasable products may be distinguished from the images representing unpurchasable products according to the sum of the inserted money, so it is possible for the user to more intuitively know which products he or she can buy.

While the purchasable products are distinguished from the unpurchasable products according to their color when additional cash is inserted, as described above, the present invention is equally applicable to a situation in which purchasable products are distinguished from unpurchasable products according to the display patterns of the product images shown in FIGS. 3B to 3F.

In FIG. 4, a quantity graphic representation 215 indicating the quantity of products is added next to the two images for the two one-dollar products. Since the sum of cash inserted into the vending machine 100 is two dollars, the user may buy one or two one-dollar products. In more detail, if the quantity graphic representation 215 is added next to the two images for two one-dollar products, the user may set the number of products which he or she desires to buy, by touching symbols, such as '+' or '-', and may then purchase as many products as the set number. However, since only two dollars are inserted, it is impossible for the user to set the number of products to be greater than '2'.

Therefore, the user may set the number of products and buy a plurality of the same products without needing to select the same product image several times.

The sum display field 230 is displayed below the menu field 210 to indicate the sum of the amount of prepaid cash and the amount of additional cash.

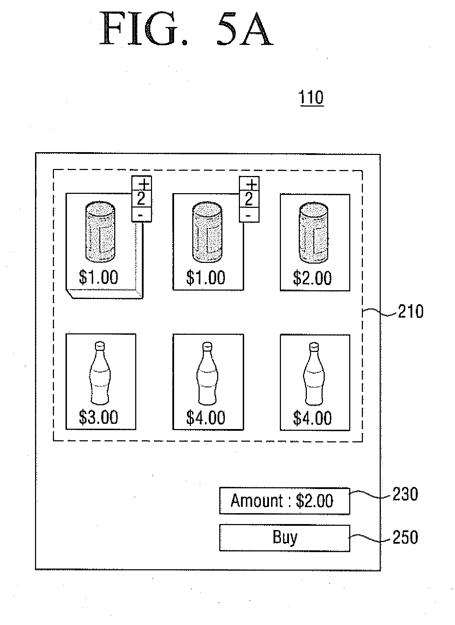

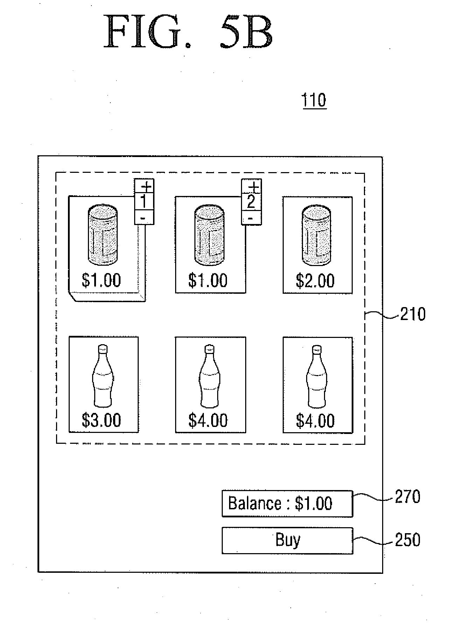

FIGS. 5A and 5B illustrate the touch screen 110 to be displayed when a user selects a product he or she is able to purchase, according to an exemplary embodiment of the invention.

Hereinafter, a situation in which a user selects a product he or she is able to purchase from the touch screen 110 displayed as shown in the exemplary embodiment of FIG. 4 will be described for convenience of description.

The touch screen 110 shown in FIG. 5A is displayed when the user inserts two dollars and selects products he or she is able to purchase with the inserted two dollars. In this situation, as two dollars have been inserted, the menu field 210 is re-constructed and displayed on the touch screen 110. Additionally, the sum display field 230 is also displayed on the touch screen 110 to notify that two dollars have been inserted.

If the user touches and selects an image for a one-dollar product displayed on the upper-leftmost side of the menu field 210, the selected image may be displayed in 3D form, and the other images may remain unchanged, that is, in 2D form.

Accordingly, it is possible to distinguish the product images selected by the user from among the images representing the purchasable products, from the other product images which are not selected by the user.

Here, the other product images which are not selected by the user comprise not only images representing products which the user is able to buy but does not select, but also images representing products which the user is unable to buy.

Therefore, the user may more intuitively perceive a difference between the products which he or she has selected and the other products.

After the user has selected the image for the one-dollar product on the upper-leftmost side of the menu field 210, a buy selection field 250, namely a 'BUY' button, by which the user determines whether to buy a product, is displayed below the sum display field 230. If the user touches the buy selection field 250 to determine to buy the one-dollar product, the one-dollar product may be output through the dispensing unit 120.

Referring to FIG. 5B, the touch screen 110 is displayed when the user inserts two dollars and selects a product costing one dollar.

Since two dollars have been inserted, the menu field 210 suitable for two dollars is displayed on the touch screen 110. In this situation, if the user touches '-' on the quantity graphic representation 215 added to the product image on the upper-leftmost side of the menu field 210, the number of the one-dollar product is set to '1'.

Subsequently, if the user selects the product image on the upper-leftmost side of the menu field 210 by touch, the selected product image is displayed in 3D form, and the other product images are displayed in 2D form. Accordingly, the product images selected by the user may be distinguished from the other product images which are not selected by the user and images representing products not able to be purchased.

In this situation, a change display field 270 is displayed below the menu field 210 instead of the sum display field 230. The change display field 270 shows information regarding change remaining after subtracting the amount of money for purchasing the product from the sum of money inserted by the user when the user buys a product corresponding to the selected product image.

Thus, it is possible for the user to know which products he or she has selected, and also to more intuitively perceive how much change is produced when he or she buys the product corresponding to the selected product image.

If the user selects an image for a one-dollar product displayed on the upper-leftmost side of the menu field 210, the buy selection field 250 appears below the sum display field 230. If the user touches the buy selection field 250 and determines to buy the one-dollar product, the one-dollar product is output through the dispensing unit 120 and one dollar is left as change. The menu field 210 changes to be identical to that displayed when one dollar is inserted.

As described above, an exemplary process of selecting products by touching product images has been described, but this is merely an example for convenience of description. Accordingly, the present invention is also applicable to other methods for selecting products. For example, when an additional image, such as a purchase basket image, is made to appear on the touch screen 110, a user may drag and drop product images onto the purchase basket image, to select products corresponding to the product images.

Additionally, the selected product images are displayed in 3D form and other non-selected product images are displayed in 2D form in order to distinguish the selected and non-selected product images as described above, but this is merely an example for convenience of description. Accordingly, the present invention is equally applicable to other methods for re-constructing the menu field 210 to distinguish the selected product images from other non-selected product images.

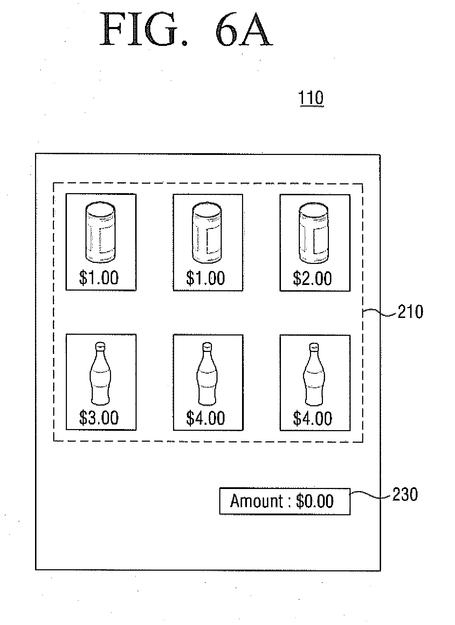

FIGS. 6A to 6D illustrate the touch screen 110 to be displayed when a card is inserted into the vending machine 100, according to an exemplary embodiment of the invention.

If a user inserts a card into the card payment unit 135, the menu field 210 showing a plurality of products stored in the vending machine 100 is displayed on the touch screen 110.

Referring to FIG. 6A, the menu field 210 displays six product images representing all products available for purchase on the touch screen 110. Since the six product images correspond to the products stored in the vending machine 100, as described above, it is understood that six types of products are stored in the vending machine 100.

A credit card has no limit to the amount of usable money or the limit is a considerable amount of money, so all the plurality of products stored in the vending machine 100 may be purchased by a credit card. Accordingly, all the six product images may be activated.

The sum display field 230 is displayed below the menu field 210. As described above, when cash is inserted, the sum display field 230 is used to notify the user of the amount of inserted cash. When the card is inserted, the sum display field 230 is used to provide the user with information regarding the sum of money to purchase a product selected by the user. In FIG. 6A, since there are no product images selected from the menu field 210 by the user, the sum display field 230 notifies that the total amount of money is '$ 0.00'.

As described above, when the card is inserted into the card payment unit 135, all six product images may be activated, so the user may select all of the six products. However, it is impossible to provide the user with a product which is out of stock, namely a product which is not stored in the vending machine 100, so the product may be deactivated.

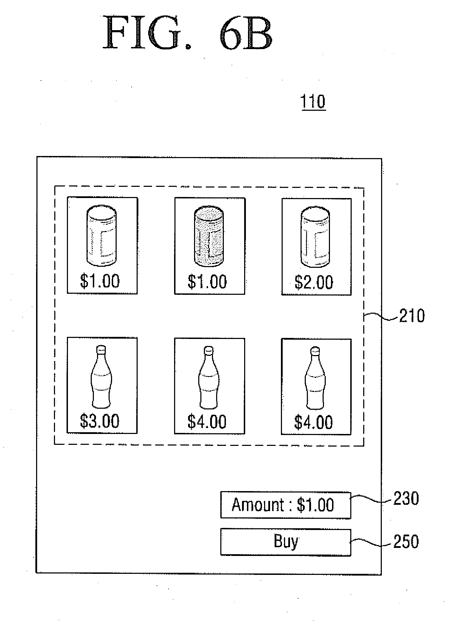

FIG. 6B illustrates the touch screen 110 when the user selects a product image displayed on the upper center side of the menu field 210, according to an exemplary embodiment of the invention.

In more detail, if the user selects a product image on the upper center side of the menu field 210 by touch, the selected product image is distinguished from other non-selected product images on the menu field 210.

The sum display field 230 is displayed below the menu field 210, and notifies that '$1.00' is required to buy a product corresponding to the selected product image.

Additionally, the buy selection field 250 is displayed below the sum display field 230. If the user decides to buy the product by touching the buy selection field 250, the product is output through the dispensing unit 120.

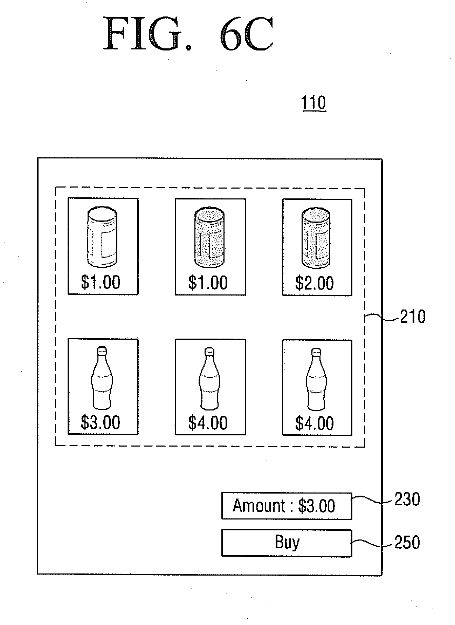

FIG. 6C illustrates the touch screen 110 when the user additionally selects another product image rather than touching the buy selection field 250, according to an exemplary embodiment of the invention..

After selecting the product image on the upper center side of the menu field 210, if the user additionally selects another product image on the upper rightmost side of the menu field 210 by touch, the selected product images on the upper center side and the upper rightmost side of the menu field 210 are distinguished from other non-selected product images.

Accordingly, it is possible for the user to more intuitively recognize which products he or she desires to buy.

The sum display field 230 displayed below the menu field 210 notifies that '$3.00' is required to buy products corresponding to the selected product images.

Additionally, the buy selection field 250 is displayed below the sum display field 230. If the user decides to buy the two products by touching the buy selection field 250, the two products are simultaneously output through the dispensing unit 120.

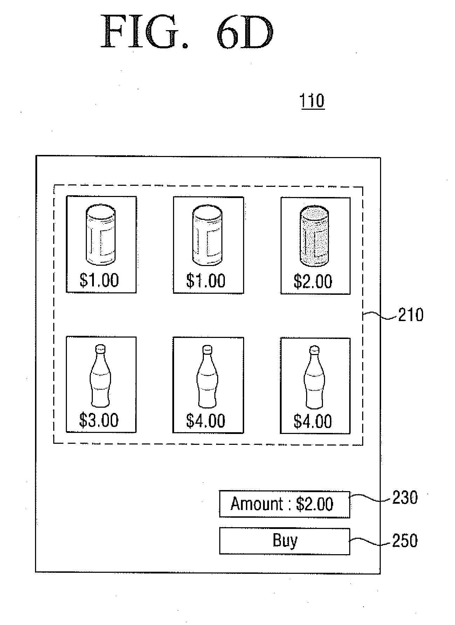

FIG. 6D illustrates the touch screen 110 to be displayed when the user cancels his or her selection rather than touching the buy selection field 250, according to an exemplary embodiment of the invention.

After selecting the two product images on the upper center side and the upper rightmost side of the menu field 210, if the user re-touches the product image on the upper center side of the menu field 210, the selection of the product image on the upper center side of the menu field 210 is cancelled, so the product image on the upper rightmost side of the menu field 210 is distinguished from other product images and the distinguished images are displayed on the touch screen 110.

Therefore, it is possible for the user to avoid buying products selected by mistake, and also possible for the user to intuitively know which product he or she finally selected.

The sum display field 230 below the menu field 210 informs the user that the amount of money to buy the product is '$2.00', which remains after subtracting the amount of money to buy the product corresponding to the product image whose selection has been cancelled, from the amount of money to buy the products corresponding to the selected product images.

Additionally, the buy selection field 250 is displayed below the sum display field 230. If the user decides to buy the product corresponding to the product image on the upper rightmost side of the menu field 210 by touching the buy selection field 250, the product is output through the dispensing unit 120.

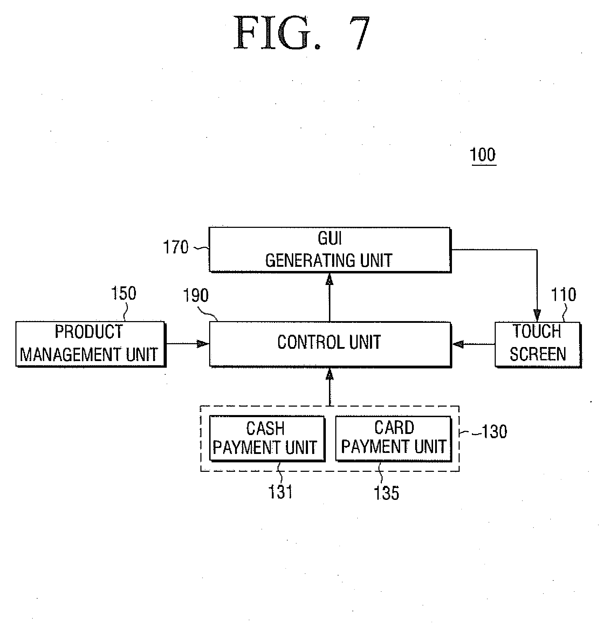

FIG. 7 is a block diagram of a vending machine 100 capable of providing graphical user interfaces (GUI), as described above, according to an exemplary embodiment of the invention. In FIG. 7, the vending machine 100 includes a touch screen 110, a payment unit 130, a product management unit 150, a GUI generating unit 170 and a control unit 190.

The touch screen 110 displays an advertising image and a menu, as described above. Accordingly, a user may touch a product image displayed on the touch screen 110 to select a product corresponding to the touched product image, and may also check a price of the product through the touch screen 110.

The payment unit 130, as described above, receives the payment from a user, in the form of one of cash or card. The payment unit 130 comprises a cash payment unit 131 for coins or bills, and a card payment unit 135 for a credit card.

The product management unit 150 stores products, generates information regarding the stored products, and transfers the generated information to the control unit 190. Here, the information regarding the stored products comprises information regarding the number of stored products, information regarding the type of the plurality of products and information regarding the price of the plurality of products.

The GUI generating unit 170 generates GUIs described above. Accordingly, the GUI generating unit 170 causes the menu field 210, sum display field 230, buy selection field 250 and change display field 270 to be formed using the generated GUIs according to whether a user inserts cash or a credit card.

The control unit 190 determines the form of payment inserted into the payment unit 130.

Additionally, the control unit 190 controls the GUI generating unit 170 to form the menu field 210, sum display field 230, buy selection field 250 and change display field 270, according to the form of payment or according to user operating commands input via the touch screen 110 or other manipulation means (not shown).

The control unit 190 receives information regarding the stored products from the product management unit 150, and controls the GUI generating unit 170 to generate images representing the stored products.

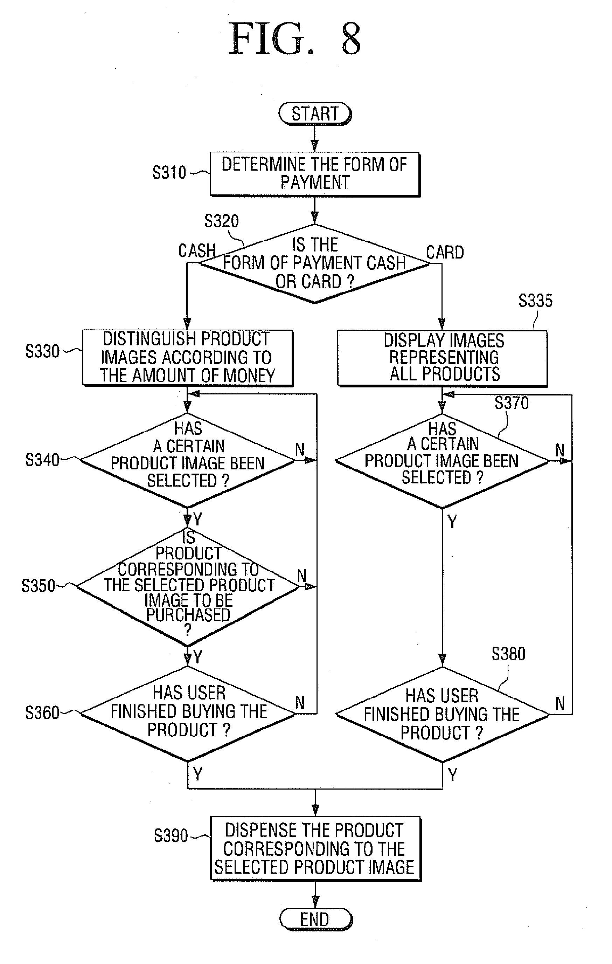

Hereinafter, a process by which the vending machine 100 of FIG. 7 provides GUIs will be described in detail with reference to FIG. 8.

In FIG. 8, the control unit 190 determines the form of payment inserted into the payment unit 130 (S310), according to an exemplary embodiment of the invention.

If it is determined that the form of payment is cash (S320-cash), the control unit 190 controls the GUI generating unit 170 to display the menu field 210, in which product images are distinguished according to the amount of money inserted into the vending machine 100 (S330). In more detail, images representing products able to be purchased with the inserted money are distinguished from other images, and shown on the menu field 210.

Subsequently, the control unit 190 determines whether a certain product image has been selected from the touch screen 110 (S340), and if so, determines whether the selected product image corresponds to a product able to be purchased (S350).

If it is determined that the image representing the product able to be purchased has been selected (S340-Y, S350-Y), the control unit 190 determines whether the user has finished buying the product (S360), that is, whether the user touches the buy selection field 250 on the touch screen 110.

If it is determined that the user has finished buying the product (S360-Y), the control unit 190 causes the product corresponding to the selected product image to be output through the dispensing unit 120 (S390).

In operation S320, if it is determined that the form of payment is a card (S320-card), the control unit 190 controls the GUI generating unit 170 so that the menu field 210 containing images representing all products stored in the vending machine 100 is displayed (S335). In more detail, the menu field 210 shows images representing all products available for purchase.

Subsequently, the control unit 190 determines whether a certain product image has been selected from the touch screen 110 (S370).

If it is determined that a certain product image has been selected (S370-Y), the control unit 190 determines whether the user has finished buying the product (S380), that is, whether the user has touched the buy selection field 250 on the touch screen 110.

If it is determined that the user has finished buying the product (S380-Y), the control unit 190 causes the product corresponding to the selected product image to be output through the dispensing unit 120 (S390).

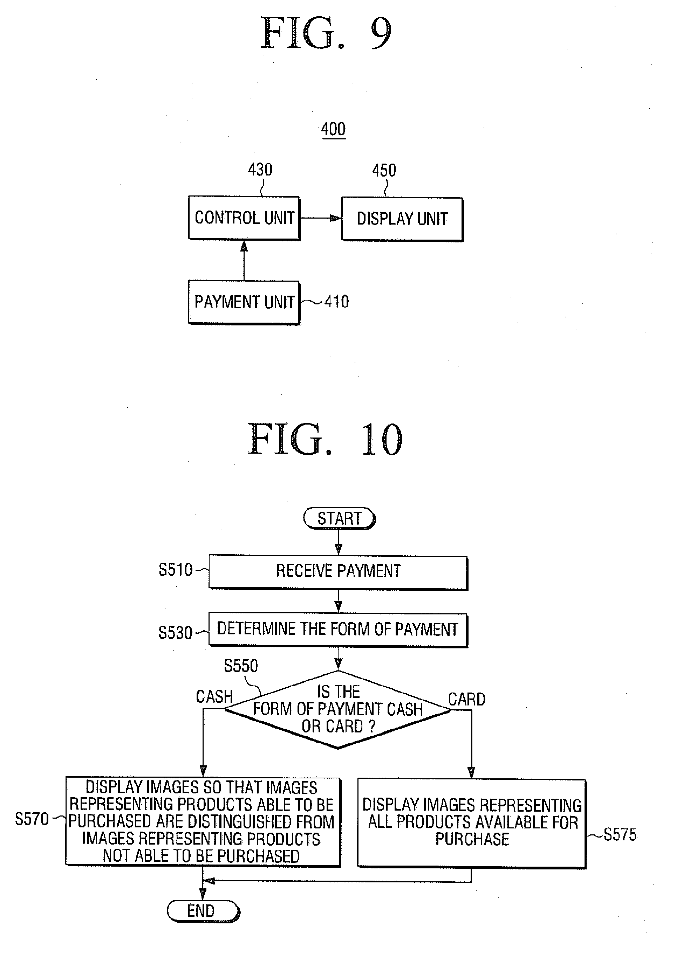

FIG. 9 is a block diagram of a product providing apparatus 400 according to an exemplary embodiment of the present invention. The product providing apparatus 400 comprises a payment unit 410, a control unit 430 and a display unit 450.

The payment unit 410 receives the payment from a user, in the form of one of cash or card.

The control unit 430 determines the form of payment received by the payment unit 410. If the form of payment is cash, the control unit 430 generates an image signal to cause images representing products able to be purchased to be distinguished from images representing products not able to be purchased and to be displayed. Alternatively, if the form of payment is a card, the control unit 430 generates an image signal to allow images representing all products available for purchase to be displayed.

The display unit 450 receives the image signal generated by the control unit 430 and displays images in response to the image signal.

Therefore, it is possible to provide the user with menu fields formed differently according to the form of payment.

Hereinafter, a process by which the product providing apparatus 400 provides products according to the form of payment will be described with reference to FIG. 10, according to an exemplary embodiment of the invention.

In FIG. 10, the product providing apparatus 400 receives payment by cash or card (S510).

If the payment is received, the product providing apparatus 400 determines the form of payment (S530).

If it is determined that cash is inserted (S550-cash), the product providing apparatus 400 displays images so that images representing products able to be purchased are distinguished from images representing products not able to be purchased (S570).

If it is determined that a card is inserted (S550-card), the product providing apparatus 400 displays images representing all products available for purchase (S575).

Therefore, it is possible to provide the user with menus formed differently according to the form of payment.

While the sum display field 230 or change display field 270 is displayed below the menu field 210 and the buy selection field 250 is displayed below the sum display field 230 or change display field 270 on the touch screen 110 in the exemplary embodiment of the present invention, this is merely an example for convenience of description. Accordingly, the position or order of the menu field 210, sum display field 230, buy selection field 250 and change display field 270 may be changed.

Additionally, a plurality of screens are displayed on a single touch screen in the exemplary embodiment of the present invention, but this is merely an example for convenience of description. Accordingly, the present invention is also applicable to a situation in which each of the plurality of screens are displayed on each of a plurality of touch screens.

Furthermore, the present invention is equally applicable to means other than the touch screen, for example, an input means such as a touch panel, or an output means such as a display panel. In this situation, if a user touches the touch panel and selects a product image, the display panel displays the selected product image.

Moreover, a plurality of product images may be displayed on a menu field in the exemplary embodiment of the present invention. Here, the plurality of product images may be moving images or still images.

As described above, according to exemplary embodiments of the present invention, a user may be provided with menu fields formed differently according to the form of payment, so it is possible for the user to buy desired products more easily and simply, and for a product provider to induce the user to buy products to increase the sales.

[01] The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A product providing apparatus comprising:
a graphical user interface (GUI) generating unit (170) which generates an image corresponding to an image signal;
a display unit (110) (450) which displays the image;
a payment unit (130) (410) which receives payment by cash or a form of credit; and
a control unit (190) (430) which determines the form of payment received by the payment unit, which controls first images corresponding to products able to be purchased to be distinguished from the second images corresponding to products not able to be purchased, and which causes the first and second images to be displayed if the payment received by the payment unit is determined to be cash, and which controls images corresponding to all products available for purchase to be displayed without being distinguished if the payment received by the payment unit is determined to be a form of credit.

2. The product providing apparatus as claimed in claim 1, wherein the control unit controls the first images to be displayed, and the second images not to be displayed.

3. The product providing apparatus as claimed in claim 1 or 2, wherein, the control unit controls the first images to be distinguished from the second images based on a color, a size, a position, and a form of the images.

4. The product providing apparatus as claimed in claim 3, wherein the form of images comprises a quantity graphic representation added next to each of the first images in order to set a number of the products, and
the control unit controls the number of the products to be changed within a preset range.

5. The product providing apparatus as claimed in claim 4, wherein the number of the products is an integer, and
the preset range is obtained by dividing an amount of cash received by the payment unit by a price of a product corresponding to an image to which the graphic representation is added.

6. The product providing apparatus as claimed in any one of claims 1 to 5, wherein, if one or more images are selected from among images corresponding to all products available for purchase, the control unit controls the selected images to be distinguished from the other non-selected images, based on at least one of color, size, position and form of the selected images, and controls the distinguished images to be displayed.

7. The product providing apparatus as claimed in claim 6, wherein the control unit controls at least one of a sum of money for purchasing the products corresponding to the selected images, and an amount of money remaining after subtracting the sum of money for purchasing the products corresponding to the selected images from an amount of cash inserted, to be displayed.

8. The product providing apparatus as claimed in any one of claims 1 to 7, wherein, if one or more images are selected from among images corresponding to all products available for purchase, the control unit controls the selected images to be distinguished from the other non-selected images, based on at least one of color, size, position and form of the selected images, and controls the distinguished images to be displayed.

9. The product providing apparatus as claimed in claim 8, wherein the control unit controls the sum of money for purchasing the products corresponding to the selected images to be displayed.

10. The product providing apparatus as claimed in any one of claims 1 to 9, wherein, if cash is received by the payment unit, the control unit controls images corresponding to products able to be purchased with a total amount of cash that has been inserted to be distinguished from the other images corresponding to products not able to be purchased with the total amount of cash that has been inserted, and controls the distinguished images to be displayed.

11. The product providing apparatus as claimed in any one of claims 1 to 10, further comprising:
a touch screen which receives a selection command input by a user,
wherein the control unit controls a product selected by the user using the touch screen to be provided to the user.

12. The product providing apparatus as claimed in any one of claims 1 to 11, wherein the products able to be purchased comprise products able to be purchased with an amount of money equal to or less than the amount of cash inserted.

13. A method for providing a graphical user interface (GUI), the method comprising:
receiving payment by cash or a form of credit (S510); and
displaying images so that first images corresponding to products able to be purchased are distinguished from second images corresponding to products not able to be purchased, if the payment is cash (S570) (S330), and displaying images corresponding to all products available for purchase if the payment is a form of credit (S575) (S335).

14. A product providing apparatus comprising:
a payment unit which receives one or more forms of payment having fixed values, the sum of the fixed values being a maximum value;
a screen which displays images representing products, the images comprising first images representing products costing less than or equal to the maximum value and second images representing products costing more than the maximum value;
a graphical user interface (GUI) generating unit which applies a first consistent modification to the appearance of each of the first images so as to visually distinguish the first images from the second images, and causes the images to be displayed on the screen.

15. The product providing apparatus of claim 14, wherein if a new form of payment having a new fixed value is received by the payment unit, the maximum value is increased by the new fixed value, and the GUI generating unit updates the images to be displayed on the screen so as to be consistent with the increased maximum value.
